# EUROPÄISCHE PATENTANMELDUNG

(11) **EP 4 602 984 A1**
(43) Veröffentlichungstag der Anmeldung: **20.08.2025**
(21) Anmeldenummer: 25157987.6
(22) Anmeldetag: 14.02.2025
(51) Int. Cl.: A47J 37/07, A47J 45/10

(54) **GRILLVORRICHTUNG, GREIFVORRICHTUNG UND SYSTEM**

(30) Priorität: 16.02.2024 DE 202024100747 U; 11.10.2024 DE 102024129484
(71) Anmelder: suryalogics GmbH, 96487 Dörfles-Esbach (DE)
(72) Erfinder: Schweizer, Christoph, 96450 Coburg (DE)
(74) Vertreter: Isarpatent

(57) **Zusammenfassung**

Die Erfindung betrifft eine Grillvorrichtung (1), mit: einem Basiselement (2), aufweisend einen Innenraum (3) zur Aufnahme einer Wärmequelle, einer Feuerplatte (4), umfassend eine Ausnehmung (5), wobei die Feuerplatte (4) über zumindest zwei Befestigungsarme (6) mit dem Basiselement (2) verbunden ist, wobei der jeweilige Befestigungsarm (6) an einem ersten Abschnitt zumindest einen Auflagearm (7) zur Auflage der Feuerplatte (4) aufweist und mit einem zweiten Abschnitt (8) in den Innenraum (3) hineinragt, wobei an dem zweiten Abschnitt (8) erste Hakenelemente (9) angeordnet sind, sodass die Wärmequelle in unterschiedlichen Abständen zu der Feuerplatte (4) lagerbar ist.

Des Weiteren betrifft die Erfindung eine Greifvorrichtung und ein System aufweisend eine Grillvorrichtung.

## Beschreibung

### GEBIET DER ERFINDUNG

Die vorliegende Erfindung betrifft eine Grillvorrichtung mit einem Basiselement und einer Feuerplatte, wobei die Feuerplatte über zumindest zwei Befestigungsarme mit dem Basiselement verbunden ist. Die vorliegende Erfindung betrifft ferner eine Greifvorrichtung und ein System.

### TECHNISCHER HINTERGRUND

Grillvorrichtungen sind aus dem Stand der Technik bekannt. Diese können beispielsweise aus einer Grilltonne oder einer Feuertonne bestehen, wobei auf der Oberseite der Tonne eine Feuerplatte aufgebracht ist. In einem Innenraum innerhalb der Grilltonne bzw. der Feuertonne ist eine Wärmequelle angeordnet, die beispielsweise aus einem offenen Feuer bestehen kann. Dadurch kann die Feuerplatte erhitzt werden. In der Feuerplatte ist dabei bevorzugt ein Grilleinsatz vorgesehen, auf den beliebiges Grillgut aufgelegt werden kann.

Bei einer derartigen Grillvorrichtung kommt beispielsweise dem Abstand zwischen der Wärmequelle und dem Grillgut eine besondere Bedeutung zu. So kann insbesondere für unterschiedliches Grillgut ein unterschiedlicher Abstand notwendig sein, um die einzubringende Hitze zu regulieren. Dabei kann weiterhin die Art der Wärmequelle entscheidend sein, ob es sich beispielsweise um eine glühende Holzkohle, einen Rauchkorb, oder um eine mit Gas betriebene Wärmequelle handelt.

Grilltonnen bzw. Feuertonnen werden meist für größere Veranstaltungen eingesetzt, wo eine Vielzahl von Personen mit Grillgut versorgt werden soll. Dabei ist es vorteilhaft, wenn die Grilltonne des Weiteren eine Aufbewahrung von Grillzubehör bietet und/oder die Möglichkeit des Verweilens bzw. des Abstellens von Getränken, Speisen oder Ähnliches für die Besucher ermöglicht.

Sollen unterschiedliche Grillgüter zubereitet werden, können weiterhin unterschiedliche Grilleinsätze notwendig sein. Dabei ist der Austausch der Grilleinsätze in der Feuerplatte meist nur im abgekühlten Zustand möglich, was die zeitnahe Verwendung bzw. den zeitnahen Austausch der Grilleinsätze erschwert.

### ZUSAMMENFASSUNG DER ERFINDUNG

Vor diesem Hintergrund liegt der vorliegenden Erfindung die Aufgabe zugrunde, eine verbesserte Grillvorrichtung anzugeben.

Des Weiteren ist Aufgabe der Erfindung, die Möglichkeit einer Greifvorrichtung vorzuschlagen, die es ermöglicht, einen Grilleinsatz einfach auszuwechseln bzw. zu bewegen und/oder in einer gewünschten Position zu halten, um beispielsweise das Grillgut auch direkt vom dem Grilleinsatz aus an eine beliebige Position zu servieren.

Erfindungsgemäß wird diese Aufgabe durch eine Grillvorrichtung mit den Merkmalen des Anspruchs 1, eine Greifvorrichtung mit den Merkmalen des Anspruchs 8 und/oder durch ein System mit den Merkmalen des Anspruchs 14 gelöst.

Demgemäß ist vorgesehen:
- Eine Grillvorrichtung, mit einem Basiselement, aufweisend einen Innenraum zur Aufnahme einer Wärmequelle, einer Feuerplatte, umfassend eine Ausnehmung, wobei die Feuerplatte über zumindest zwei Befestigungsarme mit dem Basiselement verbunden ist, wobei der jeweilige Befestigungsarm an einem ersten Abschnitt zumindest einen Auflagearm zur Auflage der Feuerplatte aufweist und mit einem zweiten Abschnitt in den Innenraum hineinragt, wobei an dem zweiten Abschnitt erste Hakenelemente angeordnet sind, sodass die Wärmequelle in unterschiedlichen Abständen zu der Feuerplatte lagerbar ist.
- Eine Greifvorrichtung für eine Grillvorrichtung zum Greifen und/oder Halten zumindest eines Grilleinsatzes, mit einem Parallelogramm, wobei über das Parallelogramm eine Bewegung in eine erste Bewegungsrichtung erfolgen kann einem Standfuß, an welchem das Parallelogramm gelagert ist, wobei durch den Standfuß eine Bewegung in eine zweite Bewegungsrichtung erfolgen kann, die ungleich der ersten Bewegungsrichtung ist, wobei an dem Parallelogramm ein Verbindungsarm vorgesehen ist, der eine Aufnahme für einen Grilleinsatz aufweist, wobei der Verbindungsarm bei Bewegung der Greifvorrichtung in die erste und zweite Bewegungsrichtung immer vertikal ausgerichtet verbleibt und der Grilleinsatz immer horizontal ausrichtbar ist.
- Ein System, aufweisend eine erfindungsgemäße Grillvorrichtung und eine Greifvorrichtung.

Die der vorliegenden Erfindung zugrundeliegende Erkenntnis besteht darin, dass durch eine flexible Ausgestaltung der unterschiedlichen Bestandteile der Grillvorrichtung und/oder der Greifvorrichtung beziehungsweise des Systems die unterschiedlichen Anwendungsfälle individuell umgesetzt werden können.

Die der vorliegenden Erfindung zugrundeliegende Idee besteht darin, eine modulare Grillvorrichtung vorzuschlagen, bei welcher zum einen der Abstand zwischen der Wärmequelle und der Feuerplatte individuell eingestellt werden kann. Des Weiteren kann durch die Grillvorrichtung eine Anbringung beliebigen Zubehörs erfolgen, welches an den Befestigungsarmen beliebig angehängt oder andersartig befestigt werden kann. Ebenso vorteilhaft kann in die Ausnehmung der Feuerplatte ein beliebiger Grilleinsatz eingelegt werden, der insbesondere über die Greifvorrichtung auch im erhitzten Zustand einfach bewegt bzw. gegriffen werden kann.

Die erfindungsgemäße Grillvorrichtung bzw. die erfindungsgemäße Greifvorrichtung und/oder das erfindungsgemäße System sind dabei insbesondere modular aufgebaut, sodass diese einfach vor Ort montiert werden können. Insbesondere kann die Montage werkzeugfrei erfolgen, sodass diese ohne großen Zeitaufwand sowie ohne Fachpersonal umgesetzt werden kann.

Das Basiselement ist insbesondere als Grilltonne bzw. Feuertonne ausgebildet, und weist bevorzugt einen runden Querschnitt auf. So kann beispielsweise eine Standardtonne verwendet werden, die beispielsweise ein Volumen von 200 1 bis 250 1, insbesondere 210 1 aufweist. In einer Ausführung kann das Basiselement mehrteilig ausgeführt sein, sodass dieses vor Ort zusammengebaut werden kann. So können beispielsweise einzelne Rohrsegmente zusammengesteckt werden, um eine Grilltonne auszubilden. In dem Basiselement kann beispielsweise ein Grill, ein Kugelgrill oder eine Feuerschale angeordnet werden, um die Wärmequelle bereitzustellen.

Die Feuerplatte weist insbesondere einen größeren Durchmesser als das Basiselement auf. Dabei können die Befestigungsarme komplett unterhalb der Feuerplatte angeordnet werden, wobei insbesondere die Befestigungsarme nicht über den Durchmesser der Feuerplatte überstehen. Wird weiteres Zubehör an den Befestigungsarme eingehängt, wie Grillzangen, Handschuhe oder Ähnliches, so kann dies verdeckt unterhalb der Feuerplatte erfolgen, sodass ein optisch ansprechender Eindruck entsteht.

Die Befestigungsarme sind vorteilhafterweise derart ausgebildet, dass diese zum einen zur Auflage der Feuerplatte, und zum anderen zum temporären Anbringen von unterschiedlichem Zubehör, wie beispielsweise auch Tisch- und/oder Stuhlelementen, dienen.

Beispielsweise kann die Feuerplatte in einem Abstand zu dem Basiselement angeordnet werden, sodass zwischen dem Basiselement und der Feuerplatte ein Zwischenraum resultiert, in welchem Armaturen zur Ansteuerung von im Innenraum befindlichen Wärmequellen angeordnet werden können.

Die Befestigungsarme sind beispielsweise L-förmig ausgebildet. Beispielsweise kann ein erster Abschnitt horizontal ausgerichtet sein und die Auflagearme ausbildet, und ein zweiter Abschnitt vertikal verlaufen und übereinander angeordnete zweite Hakenelemente aufweist.

Die zweiten Hakenelemente können beanstandet zueinander angeordnet sein, sodass der Abstand von jedem zweiten Hakenelement zu der Feuerplatte unterschiedlich ausgebildet ist.

Insbesondere werden drei Befestigungsarme gleichbeanstandet in Umfangsrichtung an dem Basiselement angeordnet, sodass eine ausreichende Lagerung der Feuerplatte, die insbesondere gegen Kippen gesichert ist, umgesetzt werden kann. Jeder der Befestigungsarme weist bevorzugt identische zweite Hakenelemente auf, sodass die Wärmequelle horizontal ausgerichtet in unterschiedlichen Abständen zu der Feuerplatte angeordnet werden kann.

Die Greifvorrichtung ist bevorzugt mobil und individuell einsetzbar, und kann insbesondere an unterschiedlichen Grillvorrichtungen werkzeugfrei montiert werden. So kann die Greifvorrichtung beispielsweise bei einer offenen Feuerstelle verwendet werden, wenn diese benachbart zu der Feuerstelle am Boden befestigt wird. Des Weiteren kann die Greifvorrichtung in Verbindung mit einer Grillvorrichtung eingesetzt werden, wenn diese insbesondere an der Grillvorrichtung befestigt wird.

Die Greifvorrichtung kann beispielsweise auch über einer Feuerstelle eingesetzt werden, wobei diese beispielsweise mit einem Adapterrohr montiert werden kann. Insbesondere ist eine Verwendung mit allen Arten von Feuerstellen möglich, wobei auch eine Festmontage, beispielsweise über eine Bodenhülse oder einen Standfuß, möglich ist.

Insbesondere dient der Standfuß zur Befestigung, wobei der Standfuß auch als Drehachse dienen kann. Der Standfuß ist insbesondere aus einem Metallrohr ausgebildet. Durch den Standfuß kann weiterhin die Höhe bestimmt werden, in welcher das Parallelogramm angeordnet ist. Durch die Höhe des Parallelogramms kann ein Abstand zu einer Wärmequelle und/oder zu einem Grilleinsatz bestimmt bzw. festgelegt werden. Insbesondere können durch Ausrichtung der vertikalen Achse des Standfußes Verformungen des Materials durch Wärmeeinwirkung ausglichen werden.

Durch die Greifvorrichtung wird insbesondere ermöglicht, dass eine Bestückung, ein Umdrehen oder auch ein Abnehmen und Servieren außerhalb einer Feuerzone stattfinden kann, ohne das Grillgut von dem Grilleinsatz herunter zu nehmen. Insbesondere ist eine Bedienperson dabei weniger Feuer und weniger Rauch ausgesetzt.

Das Parallelogramm weist bevorzugt zwei parallel zueinander angeordnete stabförmige Elemente auf, die derart mit dem Standfuß punktförmig gelagert sind, dass sich diese parallel zueinander verschieben können. Insbesondere sind die stabförmigen Elemente an einem Ende jeweils mit dem Standfuß und an einem gegenüberliegenden Ende jeweils mit dem Verbindungsarm punktförmig gelagert. Dadurch können sich die beiden stabförmigen Elemente des Parallelogramms parallel zueinander bewegen, während sich der Standfuß und der Verbindungsarm in einer vertikal ausgerichteten Position befinden. Das Parallelogramm weist daher insbesondere eine Vierpunkt-Lagerung auf.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer Ausführungsform können die Befestigungsarme an dem ersten Abschnitt zweite Hakenelemente aufweisen, die zur temporären Aufnahme und/oder Anbringung von weiterem Zubehör außerhalb des Basiselements ausgebildet sind. Bei dem Zubehör kann es sich insbesondere auch um Tische, Tischelemente bzw. Stuhlelemente handeln, die an den zweiten Hakenelementen eingehängt werden können. Ebenso kann es sich beispielsweise bei dem Zubehör um ein Regal handeln, das insbesondere in einem bestimmten Raster angeordnete Regalbretter aufweist. So kann beispielsweise in einem 25 cm Raster ein Regal seitlich an dem Basiselement angeordnet werden, in welchem weiteres Zubehör, insbesondere Grillutensilien, abgelegt werden können. Bevorzugt werden jedoch Tischelemente als Zubehör eingesetzt.

In einer Ausführungsform kann es daher möglich sein, rings um das Basiselement Tischelemente anzuordnen, insbesondere 4 bis 6 Tischelemente. In einer Ausführungsform können auf einer Ebene sechs Tischelemente angeordnet werden. Die Tischelemente können auf unterschiedlichen Höhen angeordnet werden, oder alle auf der gleichen Höhe. So kann ein Raster vorgesehen sein, um Tische auf vier bis 8, bevorzugt 8 unterschiedlichen Höhen anzuordnen. Alternativ oder zusätzlich können auf zwei Seiten Tischelemente vorgesehen sein, wodurch eine Vielzahl an Möglichkeiten entsteht. Alternativ oder zusätzlich ist es möglich, Stuhlelemente rings um das Basiselement anzuordnen, die beispielsweise auch abwechselnd mit Tischelementen vorgesehen sein können. So ist es möglich, die Besucher rings um die Grillvorrichtung zu versammeln.

Die Tischelemente können über Tischhalterungen an der Feuerplatte befestigt werden. Dazu kann an zumindest einer Seite der Tischhalterung ein Vorsprung oder ein Schlitz vorgesehen sein, sodass die Tischhalterung in der Feuerplatte eingehängt und daran befestigt werden kann. Die Befestigung und Fixierung sowie eine Demontage erfolgt insbesondere werkzeugfrei.

Der Vorsprung kann insbesondere als Hakenelement, Nase, Nippel oder dergleichen ausgebildet ist. Insbesondere weist der Vorsprung zumindest einen Hinterschnitt auf, sodass die Tischhalterung sicher an dem Tischelement befestigt werden kann. Durch den Vorsprung kann die Tischhalterung in einer Bohrung in der Feuerplatte befestigt werden. Insbesondere kann durch Belastung des Tischelements während der Nutzung die Fixierung unterstützt werden.

Alternativ kann die Tischhalterung einen Schlitz aufweisen, wobei die Tischhalterung mit dem Schlitz an der Feuerplatte eingehängt werden kann.

Gemäß einer Ausführungsform kann in der Ausnehmung der Feuerplatte zumindest ein Adapterelement angeordnet sein, das eine Öffnung aufweist, die an einen gewünschten Grilleinsatz angepasst ist. Dadurch kann auch bei einer standardisierten Öffnung die Möglichkeit bestehen, unterschiedliche Grilleinlagen bzw. Grilleinsätze zu verwenden. Als Adapterelement können dabei unterschiedliche Einlageringe verwendet werden, die unterschiedliche Öffnungen aufweisen. So kann ein Adapterelement beispielsweise zum Einhängen eines Rauchkorb ausgebildet sein, der insbesondere zum Aromatisieren bei Coburger Bratwürsten eingesetzt werden kann. Ein weiteres Adapterelement kann zum Einlegen diverser Grilleinsätze, wie insbesondere auch eines DutchOven bis 9 Liter, ausgebildet sein. Des Weiteren können Adapterelemente vorgesehen sein, die das Einhängen von Töpfen, Kesseln, Grillrosten oder Grillplatten ermöglichen. Ebenso kann ein Adapterelement vorgesehen sein, das zur Aufnahme eines Rauchrohres, insbesondere mit einem Durchmesser von bis zu 200 mm, ausgebildet ist. Dadurch kann beispielsweise eine Brennkammer im Innern des Basiselements durch das Rauchrohr bestückt werden. Durch das Vorhalten unterschiedlicher Adapterelemente sowie deren Austausch kann daher die Grillvorrichtung individuell angepasst werden.

Gemäß einer Ausführungsform kann die Öffnung daher zur Aufnahme eines Rauchkorbs, eines Kohlekorbs, einer Grillschale, eines Grillrostes, einer Grillplatte, einer Pfanne und/oder eines Feuertopfes ausgebildet sein.

Gemäß einer Ausführungsform kann die Ausnehmung einen Durchmesser von größer als 300 mm aufweisen, insbesondere 360 mm bis 400 mm, bevorzugt 360 mm. Ist die Öffnung zwischen 360 mm und 400 mm, so können insbesondere auch 50 cm Holzscheite durch die Öffnungen durchgeführt werden, um der Wärmequelle zuzuführen.

Gemäß einer Ausführungsform kann eine Auflageplatte umfasst sein, die zur Fixierung an den ersten Hakenelementen Ausnehmung aufweist, wobei die Auflageplatte zur Auflage der Wärmequelle ausgebildet ist. So kann das Basiselement beispielsweise auch kompatibel für einen Gaskocher oder einen Gasgrill sein, der auf der Auflageplatte abgestellt werden kann. Beispielsweise kann dieser in Kombination mit einer Paella Pfanne verwendet werden, die in das Adapterelement eingehängt werden kann, die insbesondere bis 50 kg schwer sein kann.

Gemäß einer Ausführungsform können in der Feuerplatte Bohrungen vorgesehen sein, die zur Aufnahme eines Dreibeins ausgebildet sind und/oder es kann in der Feuerplatte eine Aufnahmevorrichtung zur Aufnahme einer Greifvorrichtung vorgesehen sein. Die Bohrungen sind insbesondere in Umfangsrichtung gleichverteilt angeordnet. Bevorzugt sind drei Bohrungen vorgesehen, sodass ein Dreibein eingesteckt werden kann.

Gemäß einer Ausführungsform der Greifvorrichtung kann an einem ersten Schenkel des Parallelogramms ein Auslegearm vorgesehen sein, der eine Aufnahme für einen Grilleinsatz und/oder ein Zubehör aufweist, und der insbesondere teleskopierbar ausgebildet ist. Der Auslegearm kann dabei auf einer Seite über das Parallelogramm überstehen, wenn dieser in einem ausgefahrenen Zustand angeordnet ist. Dadurch kann beispielsweise eine Beleuchtungsvorrichtung, wie insbesondere eine Taschenlampe, eine LED-Beleuchtung oder Ähnliches, am Ende des Auslegerarms angeordnet werden, während an dem Verbindungsabschnitt der Grilleinsatz gehalten wird. So kann eine Beleuchtung der Stelle, an welche sich das Grillgut befindet, sichergestellt werden, ohne weitere Beleuchtungsmittel vorzusehen.

Ebenso kann am Ende des Auslegerarms über eine Kette o. ä. ein Dreibein eingehängt werden, wodurch beispielsweise ein Schaukelberaten über der Wärmequelle angeordnet werden kann.

Der Auslegearm kann ebenso derart eingefahren werden, dass dieser nicht über das Parallelogramm übersteht.

Gemäß einer Ausführungsform der Greifvorrichtung kann an dem Parallelogramm gegenüberliegend zu dem Verbindungsarm ein Griffelement angeordnet sein. Durch das Griffelement kann das Parallelogramm bzw. die Greifvorrichtung an eine gewünschte Position bewegt werden, ohne dass der aufgeheizte Abschnitt kontaktiert werden muss.

Gemäß einer Ausführungsform der Greifvorrichtung kann an dem Standfuß ein Flansch vorgesehen sein, der eine Auflage und/oder Arretierung des Standfußes in einer gewünschten Höhe ermöglicht. Der Flansch kann insbesondere um den rohrförmigen Standfuß herum verlaufen und eine Art Kragen ausbilden, durch welchen weitere Befestigungsmittel geführt werden können. So kann der Flansch beispielsweise mit Schrauben oder Bolzen an der Feuerplatte befestigt werden. Insbesondere kann der Flansch Gewindebohrungen aufweisen, die zur Anbringung von Justierschrauben dienen. Dadurch kann der Winkel des Standfußes verändert werden. Insbesondere können dadurch Verformungen des Materials durch Wärmeeinwirkung ausglichen werden. Die Höhe des Standfußes wird dabei bevorzugt nicht verändert, wobei insbesondere der Winkel eingestellt werden kann.

Gemäß einer Ausführungsform der Greifvorrichtung kann das Parallelogramm mit zwei ersten Kontaktpunkten an dem Standfuß und zwei zweiten Kontaktpunkten an dem Verbindungsarm gelagert sein, wobei ein erster Kontaktpunkt eine zusätzliche Führung aufweist, sodass eine Fixierung in einer gewünschten Position in der ersten Bewegungsrichtung möglich ist. Dadurch kann ein Winkel festgelegt werden, in welchem das Parallelogramm fixiert bzw. gehalten wird, sodass beispielsweise der Grilleinsatz in einer gewünschten Höhe oberhalb der Feuerplatte gehalten werden kann. So kann beispielsweise die Höhe des Grilleinsatzes auch unabhängig von der Höhe der Feuerplatte gehalten werden, während das Grillgut gegrillt wird.

Gemäß einer Ausführungsform der Greifvorrichtung kann zur Fixierung eine Rändelschraube vorgesehen sein. Die Rändelschraube kann einfach händisch bedient werden, um das Parallelogramm in einen gewünschten Winkel zu fixieren.

Gemäß einer Ausführungsform des Systems kann in der Feuerplatte Bohrungen neben der Aufnahme vorgesehen sind, sodass eine Arretierung des Standfußes in einer bestimmten Ausrichtung über Stiftelemente möglich ist. So können die Stiftelemente insbesondere durch die Bohrungen sowie durch den Flansch an dem Standfuß geführt werden, um den Flansch gegen die Feuerplatte zu drücken. Dadurch kann weiterhin eine Justage bzw. Ausrichtung des Standfußes in einer gewünschten vertikalen Position ermöglicht werden, in dem zumindest zwei gegenüberliegend angeordnete Schrauben verwendet werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: ein erfindungsgemäßes System in einer möglichen Ausführungsform;
- Fig. 2: ein erfindungsgemäßes System in einer möglichen Ausführungsform;
- Fig. 3: ein erfindungsgemäßes System in einer möglichen Ausführungsform;
- Fig. 4: ein erfindungsgemäßes System in einer möglichen Ausführungsform;
- Fig. 5: ein erfindungsgemäßes System in einer möglichen Ausführungsform;
- Fig. 6: ein erfindungsgemäßes System in einer möglichen Ausführungsform;
- Fig. 7: ein Ausschnitt einer erfindungsgemäßen Grillvorrichtung in einer möglichen Ausführungsform;
- Fig. 8: eine erfindungsgemäße Greifvorrichtung in einer möglichen Ausführungsform;
- Fig. 9: eine erfindungsgemäße Greifvorrichtung in einer möglichen Ausführungsform;
- Fig. 10: unterschiedliche Positionen einer Greifvorrichtung;
- Fig. 11: eine weitere Ausführungsform einer Grillvorrichtung;
- Fig. 12: eine Anordnung eines Tischelements an einer Grillvorrichtung;
- Fig. 13: weitere mögliche Anordnungen eines Tischelements an einer Grillvorrichtung;
- Fig. 14: eine weitere Ausführungsform einer Grillvorrichtung;
- Fig. 15: eine mögliche Montage eines Tischelements an einer Grillvorrichtung;
- Fig. 16: eine mögliche Montage eines Tischelements an einer Grillvorrichtung;
- Fig. 17: eine mögliche Ausführungsform eines Tischelements;
- Fig. 18: eine mögliche Montage eines Tischelements an einer Grillvorrichtung;
- Fig. 19: eine weitere mögliche Anordnung eines Tischelements an einer Grillvorrichtung;
- Fig. 20: ein Detail der Ausführungsform aus Fig. 19;
- Fig. 21: ein Detail der Ausführungsform aus Fig. 19 und 20;
- Fig. 22: eine weitere mögliche Anordnung eines Tischelements an einer Grillvorrichtung;
- Fig. 23: ein Detail der Ausführungsform aus Fig. 22;
- Fig. 24: ein Detail der Ausführungsform aus Fig. 22 und 23;
- Fig. 25: eine weitere mögliche Montage eines Tischelements an einer Grillvorrichtung;
- Fig. 26: ein Detail der Ausführungsform aus Fig. 25;
- Fig. 27: ein Detail der Ausführungsform aus Fig. 25 und 26;
- Fig. 28: ein Detail der Ausführungsform aus Fig. 25 bis Fig. 27.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausgeführt ist - jeweils mit denselben Bezugszeichen versehen.

### BESCHREIBUNG VON AUSFÜHRUNGSBEISPIELEN

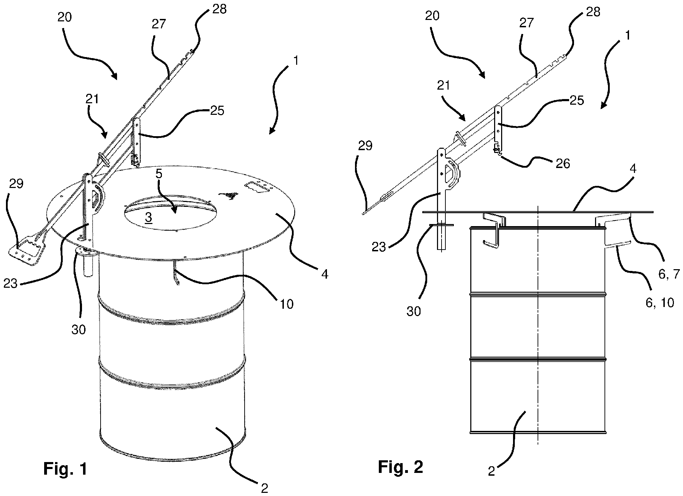

Die Figuren 1 bis 6 zeigen ein erfindungsgemäßes System in möglichen Ausführungsformen. Dabei sind Ausführungsformen der Grillvorrichtung 1 sowie der Greifvorrichtung 20 gezeigt.

Figur 1 zeigt eine Grillvorrichtung 1 mit einem Basiselement 2 und einer Feuerplatte **4.** Das Basiselement 2 ist als mehrteilige Grilltonne ausgebildet, wobei beispielhaft drei rohrförmig Abschnitte dargestellt sind. Dabei kann das Basiselement 2 beispielsweise vor Ort zusammengebaut werden.

Die Feuerplatte 4 ist als runde Platte ausgeformt und weist eine Ausnehmung 5 auf. Die Feuerplatte 4 ist dabei mit einem größeren Querschnitt als das Basiselement 2 ausgebildet.

Wie in Figur 2 erkennbar, überragen die Befestigungsarme 6 die Feuerplatte 4 nicht, sodass ebenso zweite Hakenelemente 10 zu Anbringung von weiterem Zubehör komplett unterhalb der Feuerplatte 4 angeordnet sind.

Die Feuerplatte 4 ist beabstandet zu dem Basiselement 2 angeordnet, sodass ein Zwischenraum zwischen Feuerplatte 4 und Basiselement 2 resultiert. Durch diesen Zwischenraum können Armaturen geführt werden, die beispielsweise zu der Wärmequelle im Innern 3 des Basiselements 2 gehören. So kann beispielsweise eine Elektronik eines Gasgrills oder ähnlichen aus dem Inneren des Basiselement 2 nach außen geführt werden, wodurch der Gasgrill auch von außen bedient werden kann.

Die Befestigungsarme 5 umfassen Auflagearme 7 zur Auflage der Feuerplatte 4. Die Auflagearme 7 sind im Wesentlichen horizontal ausgerichtet. Unterhalb, und insbesondere parallel, zu den Auflagearmen 7 sind weitere zweite Hakenelemente 10 vorgesehen, die zum Einhängen von weiterem Zubehör dienen können. So können beispielsweise Anbautische mit Raster-Tisch-Halterungen vorgesehen sein, die in die zweiten Hakenelemente 10 eingehängt werden können. Abweichend zu der dargestellten Ausführungsform können die zweiten Hakenelemente in einer abweichenden Höhe an dem Basiselement 2 angeordnet sein. Ebenso kann eine Mehrzahl von zweiten Hakenelementen 10 übereinander vorgesehen sein, sodass in unterschiedlichen Höhen beispielsweise Tischelemente eingehängt werden können. Des Weiteren können beispielsweise Stehtische oder Ähnliches vorgesehen sein, die an den zweiten Hakenelementen 10 befestigt werden können.

Weiterhin können rings um das Basiselement 2 beispielsweise bis zu 10 Tische auf einer Ebene montiert werden. Diese werden bevorzugt derart platziert, dass diese nicht dem Rauch beziehungsweise Ruß ausgesetzt sind. Die Montage erfolgt bevorzugt werkzeuglos an der Feuerplatte, sodass diese individuell angepasst werden kann.

Die Tischelemente 34 der Tische können an den Hakenelementen 10 bzw. Befestigungsarmen 6 zwischengelagert werden, wenn diese nicht benötigt werden. Dabei sind diese nicht dem Rauch ausgesetzt.

Im Unterschied zu der dargestellten Ausführungsform ist es ebenso denkbar, die Grillvorrichtung 1 ohne Greifvorrichtung 20 auszubilden.

In einer nicht dargestellten Ausführungsform kann das Basiselement 2 ebenso einteilig ausgeführt sein oder eine andersartige Geometrie aufweisen, wie beispielsweise einen rechteckigen oder quadratischen Querschnitt.

Die Ausnehmung 5 in der Feuerplatte 4 weist insbesondere einen Durchmesser auf, der größer als 360 mm ausgebildet ist. Dadurch kann eine besonders große Öffnung in der Feuerplatte 4 ausgebildet werden, durch die eine Vielzahl an unterschiedlichen Wärmequellen eingeführt werden kann. Des Weiteren kann der Innenraum 3 des Basiselement 2 dadurch leicht erreicht werden.

Die Figuren 1 und 2 zeigen die Greifvorrichtung 20 in einer nach oben geschwenkten Position. An der Greifvorrichtung 20 ist in der dargestellten Ausführungsform kein Grilleinsatz befestigt.

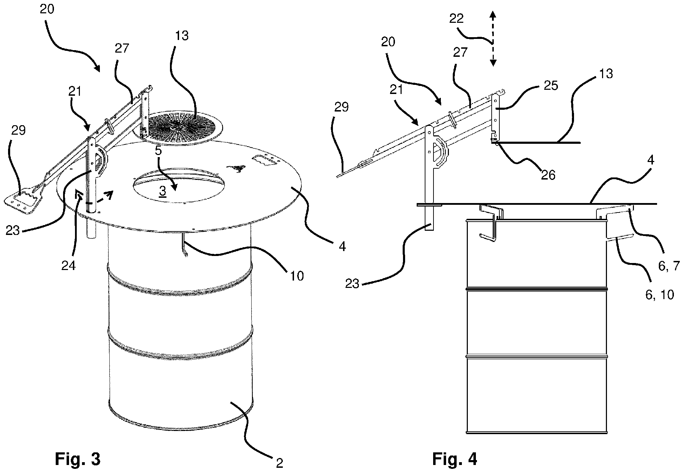

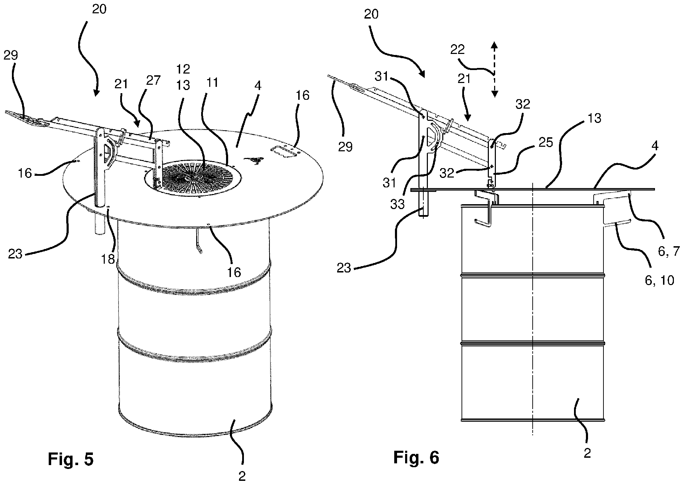

Die Greifvorrichtung 20 weist ein Parallelogramm 21 auf, das aus zwei stabförmigen Elementen besteht. Wird das Parallelogramm 21 in der ersten Bewegungsrichtung 22, dargestellt in Figur 4 und 6, bewegt, so sind die beiden stabförmigen Elemente in jeder Position parallel zueinander ausgerichtet. Des Weiteren ist der Verbindungsarm 25 in jeder Position vertikal ausgerichtet. Dadurch kann ein Grilleinsatz 13, der an einer Aufnahme 26 an dem Verbindungsarm 25 eingehängt ist, in jeder Position horizontal ausgerichtet sein.

An dem Parallelogramm 21, insbesondere an einem der Stabelemente, an welcher ebenso ein Griffelement 29 vorgesehen ist, kann ein Auslegerarm 27 vorgesehen sein, der in Richtung der Ausnehmung 5 der Feuerplatte 4 das Parallelogramm 21 überragt. Dadurch kann an einer Position beabstandet zu dem Parallelogramm 21 beziehungsweise beabstandet zu dem Verbindungsarm 25 ein weiteres Zubehör eingehängt werden. Dazu ist an dem Auslegerarm 27 eine Aufnahme 28 vorgesehen, die beispielsweise als zumindest eine Nut bzw. zumindest eine Nase oder Kerbe oder auch als Schlitz ausgebildet sein kann. In die Aufnahme 28 kann ein Zubehör eingehängt werden, wie beispielsweise auch ein Beleuchtungselement. Dadurch kann der Bereich, in welchem die Aufnahme 26 des Verbindungsarms 25 angeordnet ist, beleuchtet werden. Alternativ oder zusätzlich kann ein Hängerost in die Aufnahme 28 eingehängt werden.

An dem Standfuß 23 kann eine Arretierschraube angebracht werden, um bei der Verwendung mit Auslegearm 27 als Teleskop-Schiene, beispielsweise bei einem Schaukelbraten, Hänge-Rost, etc., das ungewollte Schaukeln des Auslegearms 27 zu verhindern.

Die Figuren 3 und 4 zeigen eine Greifvorrichtung 20, in welche ein Grilleinsatz 13 eingehängt ist. Der Verbindungsarm 25 kann im Bereich der Aufnahme 26 einen Haken aufweisen, der als Auflage für den Einsatz 13 dient. Weiterhin kann der Grilleinsatz 13 am Rand zwischen dem Haken und dem Verbindungsarm 25 geklemmt werden. Dadurch kann der Grilleinsatz 13 rechtwinklig zudem Verbindungsarm 25 ausgerichtet gehalten werden. In der dargestellten Position kann der Grilleinsatz 13 auch während einem Grillvorgang gehalten werden. Dadurch kann die Greifvorrichtung 20 zur Ausrichtung des Grilleinsatzes 13 dienen, während auf dem Grilleinsatz 13 Grillgut gegrillt wird. Der Abstand zwischen dem Grilleinsatz 13 und der Wärmequelle kann dadurch durch die Greifvorrichtung 20 einfach und schnell geändert werden. Anstelle des Grilleinsatzes 13 als Grillrost kann ebenso ein Feuertopf oder Ähnliches an dem Verbindungsarm 25 gehalten werden.

Die Greifvorrichtung 20 kann daher in einer ersten Bewegungsrichtung 22, insbesondere vertikal, und in einer zweiten Bewegungsrichtung 24, insbesondere rotatorisch um den Standfuß 23, ausgerichtet und/oder bewegt werden, siehe Fig. 3 und **4****.**

In der Darstellung in Figur 5 ist der Grilleinsatz 13 in einem Adapterelement 11 gehalten. Das Adapterelement 11 ist an die Ausnehmung 5 in der Feuerplatte 4 angepasst, und kann eine beliebige Öffnung 12 aufweisen. Die Öffnung 12 kann an eine beliebige Geometrie angepasst werden. Die Öffnung 12 kann zum Halten eines Rauchkorbs, eines Kohlekorbs, einer Grillschale, eines Grillrostes, einer Grillplatte, einer Pfanne und/oder eines Feuertopfes ausgebildet sein.

Insbesondere wird der Grilleinsatz 13 daher nicht direkt, sondern über das Adapterelement 11 von der Aufnahme 26 des Verbindungsarms 25 gehalten. Dadurch kann immer eine ebene Fläche des Adapterelements 11 als Kontakt zu der Aufnahme 26 dienen, wodurch ein sicheres Halten gewährleistet werden kann.

Die Figuren 5 und 6 zeigen eine Position, in welcher der Grilleinsatz 13 in der Ausnehmung 5 der Feuerplatte 4 angeordnet ist. Insbesondere kann der Grilleinsatz 13 über die Greifvorrichtung 20 in diese Position gebracht werden, wie dargestellt.

In Figur 6 sind vier Drehpunkte des Parallelogramms 21 gekennzeichnet, wobei das Parallelogramm 21 mit zwei ersten Kontaktpunkten 31 mit dem Standfuß 23 gekoppelt ist, und mit zwei zweiten Kontaktpunkten 32 mit der Verbindungarm 25 gekoppelt ist.

In einer weiteren Ausführungsform kann eine Führung 33 vorgesehen sein, die insbesondere an dem Standfuß 23 angeordnet ist. Die Führung ist insbesondere mit einem stabförmigen Element des Parallelogramms 21 derart kontaktiert, dass das Parallelogramm 21 in einer gewünschten Auslenkung fixiert werden kann. So kann die Führung 33 einen Schlitz aufweisen, durch welchen eine Schraube geführt werden kann. Durch Fixieren der Schraube kann das stabförmige Element des Parallelogramms 21 mit der Führung 33, und damit mit dem Standfuß 23 fixiert werden. So kann die Greifvorrichtung 20 beispielsweise wie in den Figuren 3 und 4 in der nach oben ausgelenkt Position fixiert werden, um den Grilleinsatz 13 in einem bestimmten Abstand zu der Feuerplatte 4 bzw. zu einer Wärmequelle für einen gewissen Zeitraum zu halten. Dies kann insbesondere dann vorteilhaft sein, wenn die Wärmequelle zu Beginn zu heiß ist, und das Grillgut in einem größeren Abstand gehalten werden soll.

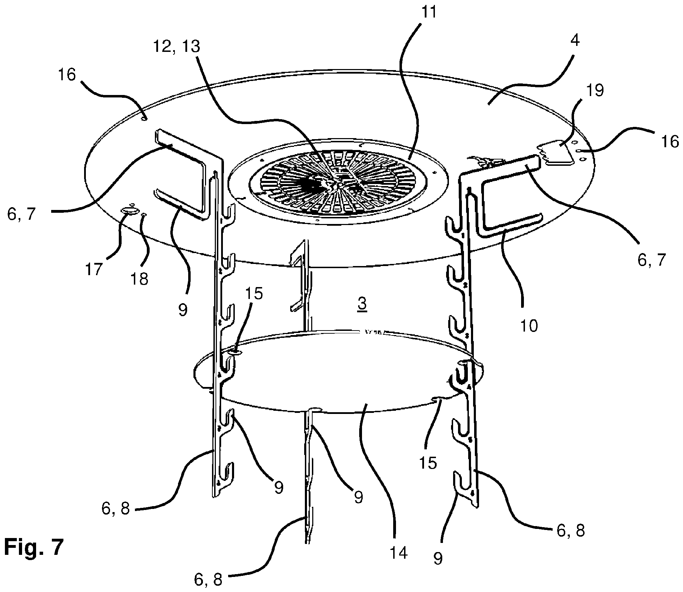

In Fig. 7 ist ein Ausschnitt einer erfindungsgemäßen Grillvorrichtung 1 in einer möglichen Ausführungsform gezeigt. Dabei ist das Innere des Basiselements 2 dargestellt, wobei in den Innenraum 3 in dieser Ausführungsform drei Befestigungsarme 6 vorgesehen sind. Die Befestigungsarme sind gleichverteilt um den Umfang der Feuerplatte 4 bzw. des Basiselements 2 angeordnet, sodass eine sichere Auflage für die Feuerplatte 4 erreicht werden kann. In einem ersten Abschnitt weisen die Befestigungsarme 6 jeweils einen Auflagearm 7 auf, der eine Auflage für die Feuerplatte 4 ausbildet. An diesem ersten Abschnitt kann weiterhin jeweils ein zweites Hakenelement 10 vorgesehen sein, an welchem weiteres Zubehör eingehängt werden kann. Der Auflagearm 7 sowie des zweite Hakenelement 10 sind jeweils außerhalb des Basiselements 2 angeordnet.

In einem zweiten Abschnitt 8, der insbesondere quer zu dem ersten Abschnitt ausgerichtet ist, sind erste Hakenelemente 9 vorgesehen, die eine horizontale Auflage für eine Auflageplatte 14 ausbilden. Der zweite Abschnitt 8 ist in dem Innenraum 3 des Basiselement 2 angeordnet.

Jeder Befestigungsarm 6 weist in dieser Ausführungsform sechs übereinander angeordnete Hakenelemente 9 auf, sodass der Abstand zwischen der Wärmequelle und der Feuerplatte 4 bzw. des Grilleinsatzes 13 individuell eingestellt werden kann. Dies kann beispielsweise dadurch erreicht werden, dass die Auflageplatte 14 in unterschiedlichen Höhen an den Hakenelementen 9 eingehängt wird. Dafür weist die Auflageplatte 14 Ausnehmungen 15 auf, die entsprechend den Positionen der Hakenelemente 9 in Umfangsrichtung an der Auflageplatte 14 vorgesehen sind.

In einer nicht dargestellten Ausführungsform wäre es ebenso denkbar, die Auflageplatte 14 auf den Hakenelementen 9 aufzulegen, bzw. zwischen den Befestigungsarmen 6 klemmend zu halten.

Die Feuerplatte 4 kann weiterhin drei Bohrungen 16 aufweisen, die zur Montage eines Dreibeins oberhalb der Feuerplatte 4 vorgesehen sind. Weiterhin oder alternativ kann die Feuerplatte 4 Bohrungen 16 aufweisen, die zur Montage der Tischelemente 34 vorgesehen sind, insbesondere 10 bis 12 Bohrungen, bevorzugt 12 Bohrungen. Des Weiteren kann eine Griffausnehmung 19 vorgesehen sein, um die Feuerplatte 4 einfach zu greifen.

Die Feuerplatte 4 kann auch ohne Bohrungen zur Arretierung der Tischhalterungen 35 dienen. Dabei können die Tischhalterungen 35 aufgeschoben, und insbesondere mit den Fixierungen 36 fixiert werden.

In der Feuerplatte 4 kann weiterhin eine Aufnahmevorrichtung 17 für die Greifvorrichtung 20 vorgesehen sein. Diese kann beispielsweise aus einer Bohrung bestehen, durch welche der Standfuß 23 geführt werden kann. Um den Standfuß 23 zu fixieren, können weitere Bohrungen 18 vorgesehen sein, die neben der Aufnahmevorrichtung 17 vorgesehen sind. Durch die Bohrungen 18 und beispielsweise einen Flansch 30 kann der Standfuß 23 mit der Feuerplatte 4 fixiert werden, insbesondere über lösbare Befestigungsmittel, wie beispielsweise Schraubenelemente. So können beispielsweise zwei Schrauben verwendet werden, um den Standfuß 23 in einer gewünschten Position vertikal auszurichten.

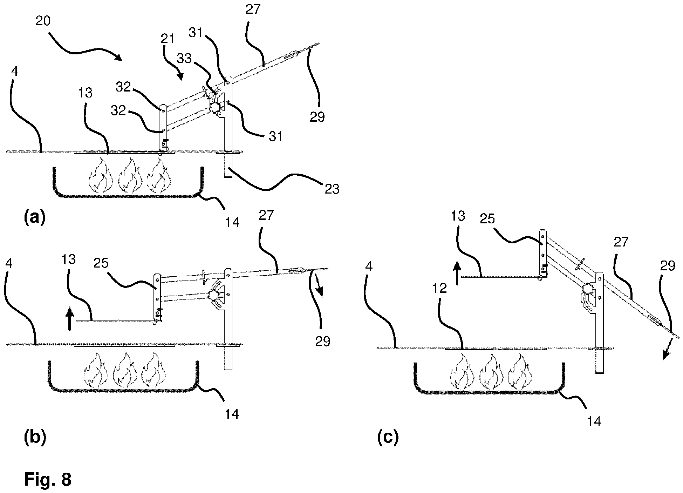

Fig. 8 zeigt eine erfindungsgemäße Greifvorrichtung 20 in einer möglichen Ausführungsform, wobei die vier Drehpunkte des Parallelogramms 21 durch die zwei ersten Kontaktpunkte 31 und die zwei zweiten Kontaktpunkten 32 dargestellt sind. Durch eine Führung 33 kann das Parallelogramm in einer gewünschten Position fixiert werden, wie beispielsweise in Fig. 8(b) oder 8(c) gezeigt. In der Position gemäß Fig. 8(a) muss das Parallelogramm 21 nicht fixiert werden, da der Grilleinsatz 13 in der Ausnehmung 5 in der Feuerplatte 4 aufliegt. Die Führung 33 weist insbesondere einen Schlitz und eine Rändelschraube auf. Die Rändelschraube kann einfach bedient werden, wodurch eine Fixierung des Parallelogramms in einer gewünschten Position einfach und werkzeugfrei umgesetzt werden kann.

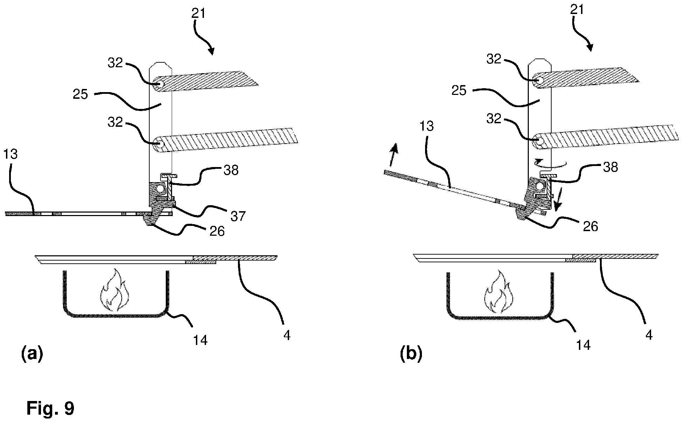

Fig. 9 zeigt eine erfindungsgemäße Greifvorrichtung 20 mit einer Detailansicht der Aufnahme 26. Wie in Fig. 9(a) gezeigt, ist der Grilleinsatz 13 immer horizontal ausgerichtet, wenn dieser, insbesondere mit dem Adapterelement 11, von der Aufnahme 26 gegriffen wird.

Die Aufnahme 26 kann einen Greifhaken bzw. einen Haken aufweisen, der schwenkbar gelagert ist. Der Haken kann einen Anschlag 37 aufweisen, der eine Ausrichtung der Aufnahme 26 relativ zu dem Verbindungsarm 25 derart ermöglicht, dass in einer Grundposition die Aufnahme 26 den Grilleinsatz 13 bzw. das Adapterelement 11 horizontal aufnehmen und lagern kann.

In einer weiteren Ausführung kann ein Schieber 38 umfasst sein, der mit dem Anschlag 37 kontaktiert werden kann. Der Schieber 38 kann verhindern, dass die Aufnahme 26 derart verschwenkt wird, dass der Grilleinsatz 13 aus der horizontalen ausgelenkt und Grillgut von dem Grilleinsatz 13 herunterfallen kann. Weiterhin kann durch Relativbewegung des Schiebers 38 eine gewünschte Auslenkung der Aufnahme 26, insbesondere des Greifhakens bzw. des Hakens, ermöglicht werden, wie in Fig. 9(b) gezeigt.

Der Schieber 38 und der Anschlag 37 können jeweils mit einem Teilbereich des Verbindungsarms 25 kontaktiert sein, um eine gewünschte horizontale Ausrichtung zu ermöglichen. Insbesondere ist in dem Verbindungsarm ein Gegenanschlag vorgesehen, gegen welchen sich der Anschlag 37 abstützen kann. In diesem Gegenanschlag kann eine Ausnehmung angeordnet sein, durch welche der Schieber 38 verlaufen kann. So kann auf geringem Bauraum die komplette Anordnung umgesetzt werden. Der Schieber 38 ist insbesondere als Rändelschraube ausgeführt, wobei ein Bereich mit dem Anschlag 37 und ein weiterer Bereich mit dem Verbindungsarm 25 kontaktiert sein kann, wie in Fig. 9(a) gezeigt. Dadurch können eingehängte Elemente, wie beispielsweise der Grilleinsatz 13, eine Verformung der Grillplatte bei Wärme ausgleichen.

Das Adapterelement 11 kann eine Ausnehmung aufweisen, in welche der Greifhaken bzw. Haken eingreifen kann, wie in Fig. 9(a) und 9(b) gezeigt.

Die Aufnahme 26 kann einen relativ massiven Haken aufweisen, sodass eine sichere Lagerung des Adapterelements 11 mit dem Grilleinsatz 13 gewährleitet werden kann. Insbesondere ist die Aufnahme 26 mit einer Wandstärke vergleichbar zu dem Adapterelement 11 und/oder dem Grilleinsatz 13 ausgebildet. Die Wandstärke kann insbesondere 5 mm betragen. Anderer Wandstärken sind ebenso denkbar.

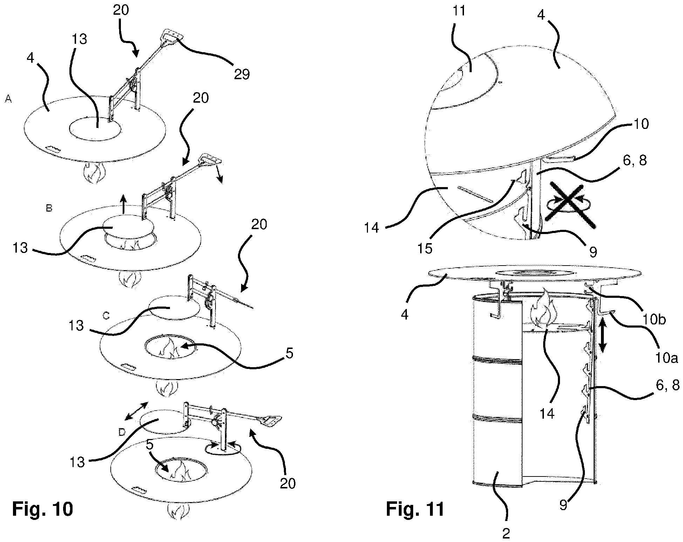

Fig. 10 zeigt unterschiedliche Positionen einer Greifvorrichtung 20. Dabei ist erkennbar, wie in den unterschiedlichen Positionen A bis D der Grilleinsatz 13 horizontal ausgerichtet ist, wobei der Greifarm 21 vertikal nach oben und unten sowie horizontal verschwenkt werden kann.

Fig. 11 zeigt eine weitere Ausführungsform einer Grillvorrichtung 1. Die Auflageplatte 14 kann Schlitze aufweisen, in welche die ersten Hakenelemente 9 eingreifen können. Durch schlitzförmige Ausnehmungen 15 kann ein Verdrehen der Befestigungsarme 6 verhindert werden. Insbesondere ist die Form der Ausnehmungen 15 komplementär zu der Form der Hakenelemente 9 ausgeformt. Dadurch kann auch ein Klappern verhindert werden.

Weiterhin ist die Feuerplatte 4 dadurch in einer Position "fest" fixiert, wenn ein Verdrehen der Befestigungsarme 6 unterbunden ist.

In einer weiteren Ausführung können zusätzliche zweite Hakenelemente 10 vorgesehen sein, die zu den Hakenelementen 10, 10a gegenüberliegend am Befestigungsarm 6 angeordnet sind. Insbesondere können zwei Hakenelemente 10b vorgesehen sein, so kann z.B. ein Grillrost, mit zwei Höhenstufen, mit einem Durchmesser von 50 cm eingeschoben werden. Die Grillvorrichtung 1, insbesondere als Feuertonne, kann somit ohne Feuerplatte 4 als Grill nutzbar sein.

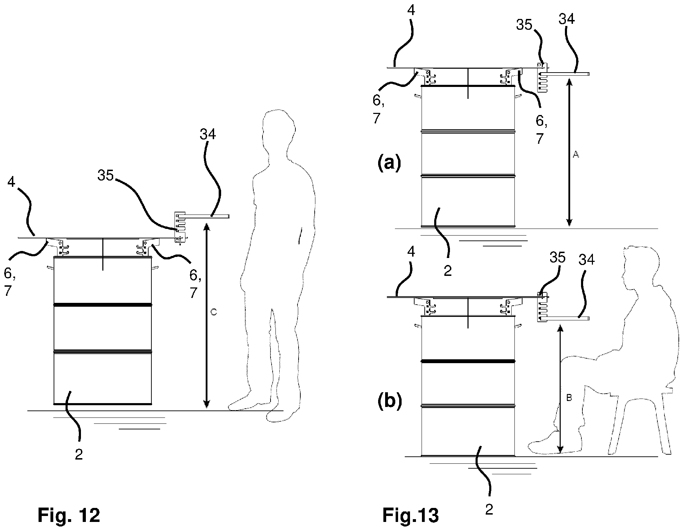

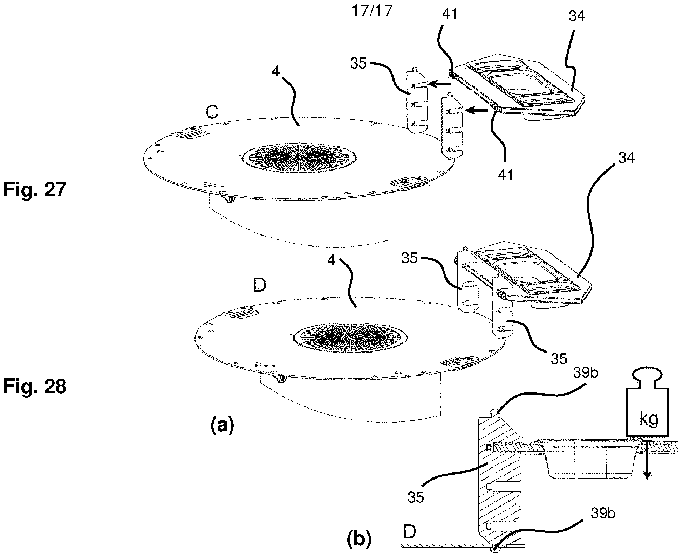

Die Figuren 12 und 28 zeigen unterschiedliche Anordnungen eines Tischelements 34 an einer Grillvorrichtung 1. Dabei sind unterschiedliche Höhen dargestellt, wobei sowohl Stehals auch Sitztische umgesetzt werden können. Die Tischelemente 34 können in den unterschiedlich dargestellten Ausführungsformen werkzeugfrei montiert und demontiert werden, wie bezüglich der folgenden Figuren erläutert.

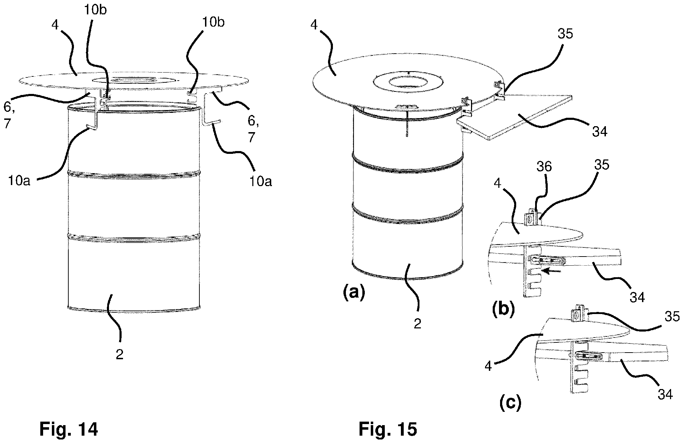

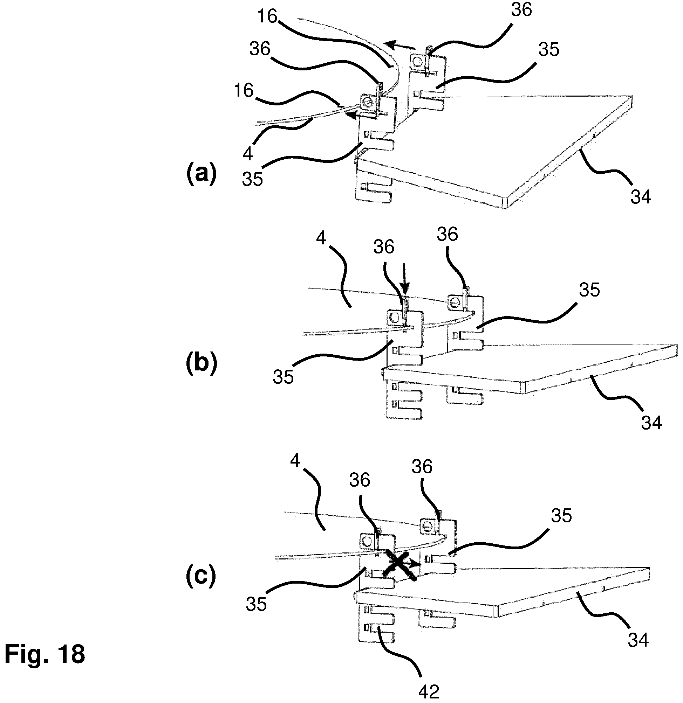

Fig. 14 zeigt eine weitere Ausführungsform einer Grillvorrichtung 1, wobei die innenliegenden Hakenelemente 10b dargestellt sind. Diese können alternativ oder zusätzlich zu den außenliegenden Hakenelementen 10a vorgesehen sein. Weiterhin können in der Feuerplatte 4 weitere Bohrungen 16, siehe Fig. 18, vorgesehen sein, um die Tischelemente 34 zu arretieren und/oder fixieren.

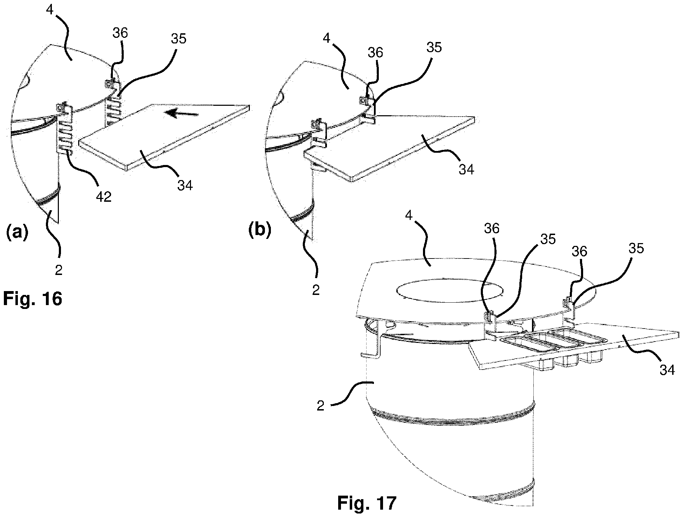

Die Figuren 15 und 16 zeigen eine mögliche Montage eines Tischelements 34 an einer Grillvorrichtung 1. Dafür sind Tischhalterungen 35 vorgesehen, die schlitzförmige Aufnahmen aufweisen, in welche die Tischelemente 34 eingehängt bzw. eingeschoben werden können. Die Tischhalterungen 35 können an der Feuerplatte 4 fixiert werden, in dem diese ebenso eine schlitzförmige Aufnahme aufweisen, in welche die Feuerplatte 4 eingeschoben werden kann. Die Tischhalterungen 35 können daher an gegenüberliegenden Seiten zumindest eine schlitzförmige Aufnahme aufweisen, sodass die Tischhalterungen 35 auf einer Seite in die Feuerplatte 4 eingeschoben werden können, und auf der anderen Seite zumindest ein Tischelement 34 eingesteckt werden kann. Insbesondere sind auf einer Seite mehrere Schlitze untereinander angeordnet, um Tischelemente 34 in unterschiedlichen Höhen einzuhängen.

Die Befestigung der Tischhalterungen 35 und der Feuerplatte 4 als auch die Befestigung der Tischplatten 34 an den Tischhalterungen 35 kann werkzeugfrei erfolgen. Eine Arretierung ist dafür nicht zwingend notwendig, aber aus Sicherheitsgründen evtl. sinnvoll. So kann eine Fixierung 36 vorgesehen sein, die eine Arretierung der Tischhalterungen 35 an der Feuerplatte 4 ermöglich. Dazu kann die Fixierung 36 in Bohrungen 16 eingreifen. Beispielsweise kann die Fixierung 36 als u-förmiges Halteelement ausgeführt sein, das die Tischhalterungen 35 umgreifen und in die Bohrungen 16 eingreifen kann.

Fig. 17 zeigt eine mögliche Ausführungsform eines Tischelements 35. Die Tische können beispielsweise Gastro-Norm-Behältern (GN-Behältern) ausgestattet sein.

Fig. 18 zeigt eine mögliche Montage eines Tischelements 34 an einer Grillvorrichtung 1 im Detail. Hierbei sind drei Montageschritte gezeigt. Wie in Fig. 18(c) gezeigt ist ein Herauslösen bzw. selbstständiges Herausschieben der Tischhalterungen 35 durch die Fixierungen 36 zusätzlich unterbunden.

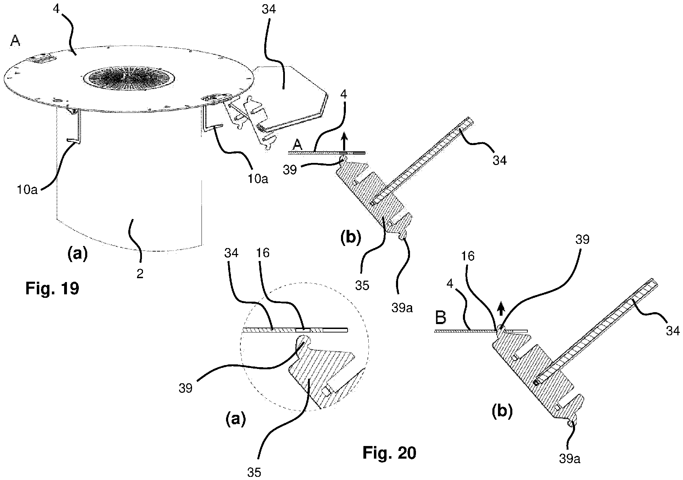

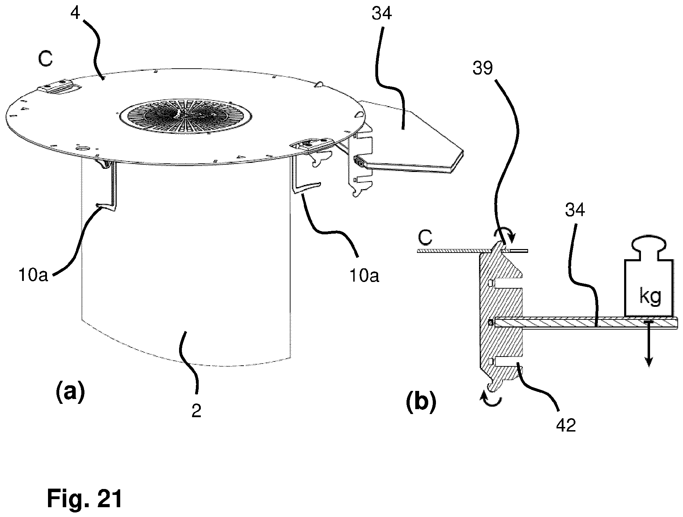

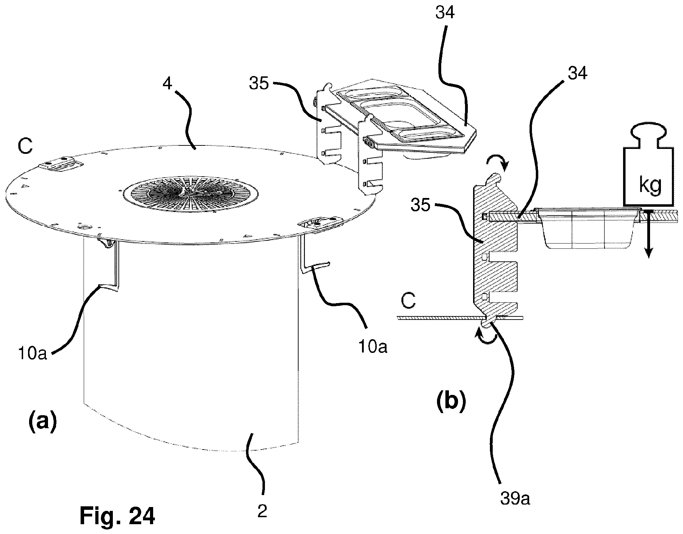

Eine weitere Ausführungsform einer Tischhalterung 35 ist in den Figuren 19 bis 28 gezeigt. Im Unterschied zu der Ausführungsform gemäß den Figuren 12 bis 18 wird die Tischhalterung 35 von unten in die Feuerplatte 4 eingehängt. Dazu weist die Tischhalterung 35 zumindest einen Vorsprung 39 auf, der in eine Ausnehmung oder ein Durchgangsloch, insbesondere eine Bohrung 16, eingesteckt bzw. eingefädelt werden kann. Vorteilhafterweise steht dabei nur ein geringer Abschnitt der Tischhalterung 35 an einer Oberseite der Feuerplatte 4 über, sodass die Oberfläche der Feuerplatte 4 durch die Tischhalterungen 35 kaum beeinflusst wird.

Die Tischhalterung 35 gemäß der Figuren 19 bis 28 kann sich ebenso zur Anbringung von Anbauten im Allgemeinen eigenen, wie bereits weiter oben beschrieben.

Die Figuren 19 und 20 zeigen, wie eine Tischhalterung 35 in einer möglichen Ausführungsform in die Feuerplatte 4 eingefädelt und eingehängt bzw. an der Feuerplatte 4 befestigt werden kann.

Die Tischhalterung 35 kann dazu an zumindest einer Seite einen Vorsprung 39 aufweisen, der insbesondere als Hakenelement, Nase, Nippel oder dergleichen ausgebildet ist. Insbesondere weist der Vorsprung 39 zumindest einen Hinterschnitt auf, sodass die Tischhalterung 35 sicher an der Feuerplatte 4 befestigt werden kann. Insbesondere greift die Feuerplatte 4 in den Hinterschnitt der Tischhalterung 35 ein. Folglich kann die Tischhalterung 35 in einer Bohrung 16 in der Feuerplatte 4 befestigt werden. Dies geschieht in dieser Ausführung über den Vorsprung 39, wobei der Vorsprung 39 in die Bohrung 16 eingefädelt wird. Dabei wird die Tischhalterung 35 abgewinkelt bezüglich der Feuerplatte 4 gehalten, in die Bohrung 16 eingefädelt und anschließend in eine vertikale Position gebracht. Dadurch kann sich der Vorsprung 39 in der Bohrung 16 halten bzw. einhängen. Diese Schritte sind mit den Positionen A bis C in den Figuren 19 bis 21 gezeigt.

Dadurch kann eine besonders einfache Anbringung von Anbauten auf bzw. an der Feuerplatte 4 bereitgestellt werden, wobei eine arretierbare Anbringung von unterschiedlichen Elementen oder Bauteilen ermöglicht wird, die im Zusammenhang mit der Grillvorrichtung Benutzung finden. Insbesondere kann durch Gewichtsbelastung der Anbauten während dem Gebrauch die Lastrichtung der Gewichtsbelastung zur sicheren Fixierung an der Feuerplatte dienen.

Durch eine Bohrung 16 kann, vorteilhafterweise von zwei Seiten der Feuerplatte 4, der Vorsprung 39 in einem Winkel von insbesondere 30° bis 60°, insbesondere 45°, bezüglich einer horizontalen Ebene, eingeschoben werden. Der Vorsprung 39 verriegelt insbesondere automatisch, sobald dieser sich in Richtung der Nutzungsrichtung, insbesondere senkrecht, bewegt. Eine Verriegelung der Tischhalterung 35 an der Feuerplatte 4 wird daher bevorzugt durch die Hebelwirkung während einer Nutzung des Tischelements 34 oder eines anderen Elements, das an der Tischhalterung 35 befestigt ist, unterstützt.

Vorteilhafterweise erfolgt die Montage an der Feuerplatte und die Montage der Tischelemente 34 oder anderer Anbauten werkzeugfrei, insbesondere auch eine Verriegelung und Entriegelung.

Eine Richtung des Einhakens der Vorsprünge 39 an der Feuerplatte 4 ist dabei bevorzugt derart ausgerichtet, dass bei einer Nutzung der Tischelemente 34 eine Fixierung unterstützt wird. Demnach ist der Vorsprung 39 bevorzugt in die Richtung ausgerichtet, in welcher das Tischelement 34 angebracht wird.

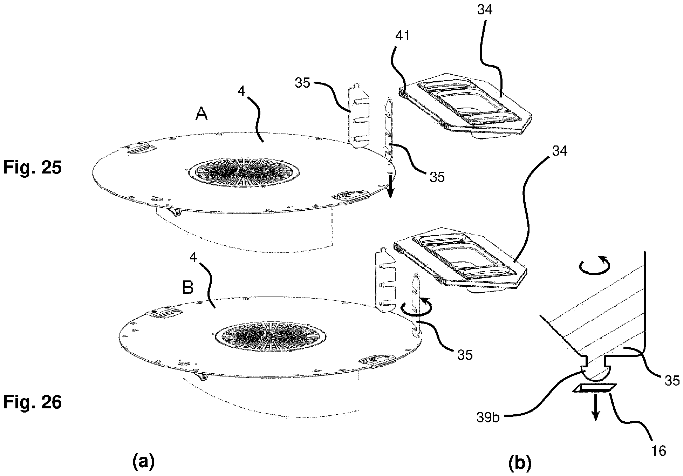

Zuvor oder nach der Anbringung der Tischhalterung 35 an der Feuerplatte 4 kann das Tischelement 34 in die Tischhalterung 35 eingehängt werden. Dazu kann das Tischelement 34 Vorsprünge 40 aufweisen, wie beispielhaft in Fig. 25 bis Fig. 28, und die Tischhalterung 35 Aufnahmen 41 aufweisen, wie beispielhaft in Fig. 20 (a) gezeigt.

Zusätzlich zu den Vorsprüngen 39 kann die Tischhalterung 35 gegenüberliegend zu dem Vorsprung 39 einen weiteren Vorsprung 39a aufweisen, der baugleich zu dem Vorsprung 39, jedoch gespiegelt dazu ausgebildet sein kann, insbesondere punktsymmetrisch. Insbesondere sind beide Vorsprünge 39, 39a als Hakenelement oder Nase mit einem Hinterschnitt ausgebildet, wobei die beiden Vorsprünge 39, 39a in dieselbe Umfangsrichtung, demnach im Uhrzeigersinn oder gegen den Uhrzeigersinn, ausgerichtet sind. Dadurch kann die Tischhalterung 35 zur Montage oberhalb oder unterhalb der Feuerplatte 4 genutzt werden.

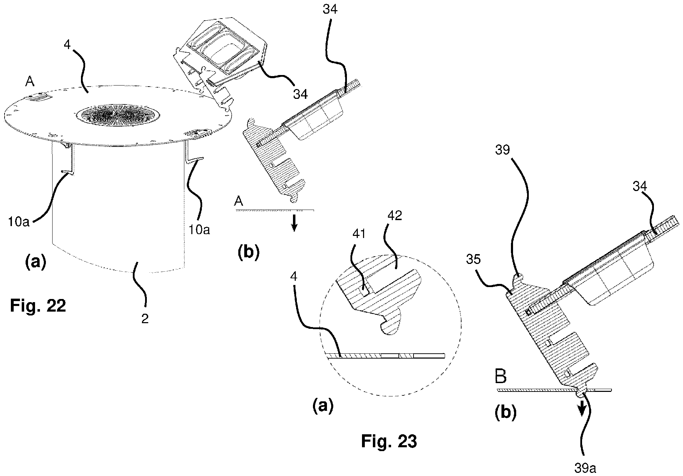

Eine Montage der Tischhalterung 35 an einer Oberseite der Feuerplatte 4 ist in den Figuren 22 bis 28 gezeigt. Dabei ist in den Figuren 25 bis 28 eine Ausführungsform gezeigt, bei der die Tischhalterung 35 gedreht in die Bohrungen 16 eingeführt wird. Wie in Fig. 26 (b) gezeigt, kann die Bohrung 16 dabei einen rechteckigen Querschnitt aufweisen, wobei durch die rechteckige Form in 90° zueinander ausgerichtete Positionen der Tischhalterung 35 entweder eine Fixierung der Tischhalterung 35 an der Feuerplatte 4 oder ein Lösen von der Feuerplatte 4 möglich ist. Der Vorsprung 39b kann dazu flach ausgebildet sein und zwei gegenüberliegende Hinterschnitte aufweisen, sodass eine Art Kopf ausgebildet wird, wie in Fig. 26 (b) gezeigt.

Weiterhin kann die Tischhalterung 35 abgewinkelt zu der Feuerplatte 4 ausgerichtet und von oben in die Bohrung 16 eingefädelt werden, wie in Fig. 22 und 23 gezeigt. Im Weiteren verläuft die werkzeugfreie Montage von oben an der Feuerplatte 4 wie die werkzeugfreie Montage von unten an der Feuerplatte 4. Wie in Fig. 28 (b) gezeigt, kann dabei durch Belastung des Tischelements 34 eine sichere Fixierung des Tischelements 34 und der Tischhalterung 35 an der Feuerplatte 4 zusätzlich sichergestellt werden. In einer derartigen Ausführungsform können die Vorsprünge 39b an gegenüberliegenden Seiten an der Tischhalterung derart identisch zueinander ausgebildet sein, dass diese symmetrisch zu einer Ebene ausgeführt sind.

Auch wenn die Tischhalterungen 35 als Tischhalterungen bezeichnet und in Verbindung mit einem Tischelement 34 gezeigt sind, sind die Tischhalterungen 35 als allgemeine Halterungen zu verstehen, und können ebenso als Halterungen, Bankhalterungen, Küchenutensilien-Halterungen, Sitzhalterungen und ähnliches bezeichnet werden.

Wie in den Figuren 19 bis 29 gezeigt, können die Tischelemente 35 beispielsweise Gastro-Norm-Behältern (GN-Behältern) oder anderweitige Aufnahmebehälter, Aufnahmen, Aussparungen oder Vertiefungen aufweisen.

Die Tischhalterungen 35 können in allen Ausführungsformen mehrere Schlitze 42 aufweisen, in welche die Tischelemente 34, oder andere Elemente, eingehängt werden können.

Allgemein sind unabhängig von der Ausführungsform insbesondere zwei Tischhalterungen 35 notwendig, um ein Tischelement 34 an der Feuerplatte 4 zu fixieren.

Wie in den Figuren 19 bis 28 gezeigt, können an der Feuerplatte 4 Griffelemente vorgesehen sein, um die Feuerplatte 4 im auseinandergebauten Zustand der Grillvorrichtung 1 besser zu transportieren.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

### Bezugszeichenliste

- 1: Grillvorrichtung
- 2: Basiselement
- 3: Innenraum
- 4: Feuerplatte
- 5: Ausnehmung in der Feuerplatte
- 6: Befestigungsarm
- 7: Auflagearm
- 8: zweiter Abschnitt
- 9: erstes Hakenelement
- 10: zweites Hakenelement
- 11: Adapterelement
- 12: Öffnung in dem Adapterelement
- 13: Grilleinsatz
- 14: Auflageplatte
- 15: Ausnehmungen in der Auflageplatte
- 16: Bohrungen in der Feuerplatte
- 17: Aufnahmevorrichtung für Greifvorrichtung
- 18: Bohrung
- 19: Griffausnehmung
- 20: Greifvorrichtung
- 21: Parallelogramm
- 22: erste Bewegungsrichtung
- 23: Standfuß
- 24: zweite Bewegungsrichtung
- 25: Verbindungsarm
- 26: Aufnahme für Grilleinsatz
- 27: Auslegearm
- 28: Aufnahme für Grilleinsatz
- 29: Griffelement
- 30: Flansch
- 31: erste Kontaktpunkte
- 32: zweite Kontaktpunkte
- 33: Führung
- 34: Tischelement
- 35: Tischhalterung
- 36: Fixierung
- 37: Anschlag
- 38: Schieber
- 39: Vorsprung
- 40: Vorsprung
- 41: Aufnahme
- 42: Schlitz

## Patentansprüche

1. Grillvorrichtung (1),
mit einem Basiselement (2), welches einen Innenraum (3) zur Aufnahme einer Wärmequelle aufweist,
mit einer Feuerplatte (4), welche eine Ausnehmung (5) umfasst und über zumindest zwei Befestigungsarme (6) mit dem Basiselement (2) verbunden ist,
wobei der jeweilige Befestigungsarm (6) an einem ersten Abschnitt zumindest einen Auflagearm (7) zur Auflage der Feuerplatte (4) aufweist und mit einem zweiten Abschnitt (8) in den Innenraum (3) hineinragt, wobei an dem zweiten Abschnitt (8) erste Hakenelemente (9) angeordnet sind, sodass die Wärmequelle in unterschiedlichen Abständen zu der Feuerplatte (4) lagerbar ist.

2. Grillvorrichtung nach Anspruch 1,
**dadurch gekennzeichnet,**
**dass** die Befestigungsarme (6) an dem ersten Abschnitt zweite Hakenelemente (10) aufweisen, die zur temporären Aufnahme und/oder Anbringung von weiterem Zubehör außerhalb des Basiselements (2) ausgebildet sind.

3. Grillvorrichtung nach einem der vorstehenden Ansprüche,
**dadurch gekennzeichnet,**
**dass** in der Ausnehmung (5) der Feuerplatte (4) zumindest ein Adapterelement (11) angeordnet ist, das eine Öffnung (12) aufweist, die an einen gewünschten Grilleinsatz (13) angepasst ist.

4. Grillvorrichtung nach Anspruch 3,
**dadurch gekennzeichnet,**
**dass** die Öffnung (12) zur Aufnahme eines Rauchkorbs, eines Kohlekorbs, einer Grillschale, eines Grillrostes, einer Grillplatte, einer Pfanne und/oder eines Feuertopfes ausgebildet ist.

5. Grillvorrichtung nach einem der vorstehenden Ansprüche,
**dadurch gekennzeichnet,**
**dass** die Ausnehmung (12) einen Durchmesser von größer als 300 mm aufweist, insbesondere 360 mm bis 400 mm.

6. Grillvorrichtung nach einem der vorstehenden Ansprüche,
**dadurch gekennzeichnet,**
**dass** eine Auflageplatte (14) umfasst ist, die zur Fixierung an den ersten Hakenelementen (9) Ausnehmungen (15) aufweist, wobei die Auflageplatte (14) zur Auflage der Wärmequelle ausgebildet ist.

7. Grillvorrichtung nach einem der vorstehenden Ansprüche,
**dadurch gekennzeichnet,**
**dass** in der Feuerplatte (4) Bohrungen (16) vorgesehen sind, die zur Aufnahme eines Dreibeins ausgebildet sind und/oder dass in der Feuerplatte (4) eine Aufnahmevorrichtung (17) zur Aufnahme einer Greifvorrichtung vorgesehen ist.

8. Greifvorrichtung für eine Grillvorrichtung (1), insbesondere für eine Grillvorrichtung (1) nach einem der vorstehenden Ansprüche, zum Greifen und/oder Halten zumindest eines Grilleinsatzes (13),
mit einem Parallelogramm (21), wobei über das Parallelogramm (21) eine Bewegung in eine erste Bewegungsrichtung (22) erfolgen kann,
mit einem Standfuß (23), an welchem das Parallelogramm (21) gelagert ist, wobei durch den Standfuß (23) eine Bewegung in eine zweite Bewegungsrichtung (24) erfolgen kann, die ungleich der ersten Bewegungsrichtung (22) ist,
wobei an dem Parallelogramm (21) ein Verbindungsarm (25) vorgesehen ist, der eine Aufnahme (26) für einen Grilleinsatz (13) aufweist, wobei der Verbindungsarm (25) bei Bewegung der Greifvorrichtung (20) in die erste und zweite Bewegungsrichtung (22, 24) immer vertikal ausgerichtet verbleibt und der Grilleinsatz (13) immer horizontal ausrichtbar ist.

9. Greifvorrichtung nach Anspruch 8,
**dadurch gekennzeichnet,**
**dass** an einem ersten Schenkel des Parallelogramms ein Auslegearm (27) vorgesehen ist, der eine Aufnahme (28) für einen Grilleinsatz (13) und/oder ein Zubehör aufweist, und der insbesondere teleskopierbar ausgebildet ist.

10. Greifvorrichtung nach einem der Ansprüche 8 oder 9,
**dadurch gekennzeichnet,**
**dass** an dem Parallelogramm (21) gegenüberliegend zu dem Verbindungsarm (25) ein Griffelement (29) angeordnet ist.

11. Greifvorrichtung nach einem der Ansprüche 8 bis 10,
**dadurch gekennzeichnet,**
**dass** an dem Standfuß (23) ein Flansch (30) vorgesehen ist, der eine Auflage und/oder Arretierung des Standfußes (23) in einer gewünschten Höhe ermöglicht.

12. Greifvorrichtung nach einem der Ansprüche 8 bis 11,
**dadurch gekennzeichnet,**
**dass** das Parallelogramm (21) mit zwei ersten Kontaktpunkten (31) an dem Standfuß (23) und zwei zweiten Kontaktpunkten (32) an dem Verbindungsarm (25) gelagert ist, wobei ein erster Kontaktpunkt (31) eine zusätzliche Führung (33) aufweist, sodass eine Fixierung in einer gewünschten Position in der ersten Bewegungsrichtung (22) möglich ist.

13. Greifvorrichtung nach Anspruch 12,
**dadurch gekennzeichnet,**
**dass** zur Fixierung eine Rändelschraube vorgesehen ist.

14. System, welches eine Grillvorrichtung (1) nach einem der Ansprüche 1 bis 8 und eine Greifvorrichtung (20) nach einem der Ansprüche 9 bis 13 aufweist,
wobei die Feuerplatte (4) eine Aufnahme aufweist, in welcher der Standfuß (23) der Greifvorrichtung (20) gelagert ist, und
wobei mit dem Verbindungsarm (25) ein Grilleinsatz (13) in die Ausnehmung (5) der Feuerplatte (4) einsetzbar und/oder aus der Ausnehmung entnehmbar ist.

15. System nach Anspruch 14,
**dadurch gekennzeichnet,**
**dass** in der Feuerplatte (4) Bohrungen (18) neben der Aufnahme vorgesehen sind, sodass eine Arretierung des Standfußes (23) in einer bestimmten Ausrichtung über Stiftelemente möglich ist.
